(19) Europäisches Patentamt
European Patent Office
Office européen des brevets

(11) **EP 1 736 322 B1**

(12) **EUROPEAN PATENT SPECIFICATION**

(45) Date of publication and mention
of the grant of the patent:
**05.11.2008 Bulletin 2008/45**

(51) Int Cl.:
*B41M 5/382* *(2006.01)*     *B60R 13/10* *(2006.01)*

(21) Application number: **06021274.3**

(22) Date of filing: **25.06.2002**

(54) **Method of thermal transfer printing, print, and vehicle licence plate**

Thermisches Übertragungsdruckverfahren, Abdruck, und Fahrzeugkennzeichen.

Méthode pour l'impression par transfert thermique, épreuve, et plaque d'immatriculation de véhicules

(84) Designated Contracting States:
**DE FR GB**

(30) Priority: **26.06.2001 JP 2001192329**

(43) Date of publication of application:
**27.12.2006 Bulletin 2006/52**

(62) Document number(s) of the earlier application(s) in accordance with Art. 76 EPC:
**02741300.4 / 1 410 922**

(73) Proprietor: **DAI NIPPON PRINTING CO., LTD.
Tokyo 162-01 (JP)**

(72) Inventors:
• **Asajima, Mikio
c/oDai Nippon Printing Co., Ltd.
Tokyo 162-8001 (JP)**
• **Hayashi, Masafumi
c/oDai Nippon Printing Co., Ltd.
Tokyo 162-8001 (JP)**

(74) Representative: **Müller-Boré & Partner
Patentanwälte
Grafinger Strasse 2
81671 München (DE)**

(56) References cited:
WO-A-96/03285          JP-A- 7 195 836
JP-A- 7 195 856        JP-A- 10 181 230
JP-A- 11 221 972

**Description**

The present invention relates to a method of thermal transfer printing on a transparent medium using a thermal ink transfer-type thermal transfer sheet. More particularly, the present invention relates to a method of thermal transfer printing on a transparent medium using a thermal transfer sheet, comprising a colored layer provided on a substrate, which, upon thermal transfer of the colored layer onto an object, can reproduce hue inherent in the colored layer on the object to provide a sharp record without being influenced by a color, a pattern or the like on the object in its recording face.

A thermal ink transfer method is known as a thermal transfer recording method. In this method, a thermal transfer sheet comprising a substrate sheet such as a plastic film having thereon a colored layer containing a colorant such as a pigment or a dye dispersed in a binder such as heat-fusible wax or resin is provided, and energy corresponding to image information is applied to the thermal transfer sheet by means of a heating device such as a thermal head to transfer the colorant together with the binder onto an image-receiving sheet such as paper or a plastic sheet. Images printed by the thermal ink transfer method have high density and high sharpness, and the thermal ink transfer method is suitable for recording of binary images of characters, line drawings and the like.

Further, in the thermal ink transfer-type recording, variable information typified by attribute information such as address, information about customers, numbering, and bar codes (in some cases, including small-lot fixed information) can be simply output and recorded by a computer and a thermal transfer printer on various objects such as labels and cards. Such output prints have been suitably used, in various applications, as small-lot diversified records and records having inherent information which is variable for each sheet.

When the recording face of an object, on which recording is carried out by the thermal transfer recording method, has a deep color, or when the recording face has a pattern, however, due to the influence of the recording face (ground), the hue of the thermally transferred colored layer is disadvantageously viewed as a color mixture, composed of the color of the recording face and the color of the colored layer, which is different from the hue inherent in the colored layer. Therefore, in this case, disadvantageously, the recorded information is somewhat, highly or quite illegible.

WO 96/03285 describes a retroreflective graphic article comprising a retroreflective base sheet, at least one color layer disposed in the optical path of said base sheet, wherein said color layer comprises a color agent in a copolymeric binder.

JP-A-07-195836 describes a thermal transfer recording medium having such a structure that a transparent color ink layer is provided on a base material and a gloss preventing layer is provided on a second layer and further, a concealing layer containing a non-leafing type aluminum powder is provided on the gloss preventing layer.

JP-A-07-195856 describes a thermal transfer recording medium which is obtained by successively arranging an ink layer, a gloss preventing layer, a metallized layer and an adhesive layer on the upper surface of a base material.

JP-A-10-181230 describes a thermal transfer recording medium, wherein a film being applied with a heat resistant slippery layer on the rear side is employed as a support, and then, a first color transfer ink layer, a metal deposition layer and a second color thermal transfer ink layer are provided on the support.

JP-A-11-221972 describes a thermal transfer sheet which comprises a colored layer made of at least a pigment and a binder resin, a barrier layer containing a thermoplastic resin or particle and a thermoplastic resin as main bodies, and an adhesive layer containing a wax as a main body sequentially provided from a base material sheet side on one side surface of the sheet.

Accordingly, in order to solve the above problem of the prior art, an object of the present invention is to provide a method of thermal transfer printing on a transparent medium using a thermal transfer sheet, comprising a colored layer provided on a substrate, which, upon thermal transfer of the colored layer onto an object, can reproduce hue inherent in the colored layer on the object to provide a sharp record without being influenced by a color, a pattern or the like on the object in its recording face.

The above object can be attained by a method of thermal transfer printing on a transparent medium using a thermal transfer sheet comprising a substrate, at least a colored layer provided on one side of the substrate and a white opaque layer provided between the colored layer and the substrate, wherein, when thermal transfer is carried out from said thermal transfer sheet onto the transparent medium to provide a thermal transfer printed face, on the transparent medium, on which a retroreflective sheet having a colored surface is then superimposed, the difference in color, as measured, for the color of an ink layer, which comprises at least the colored layer and the white opaque layer, which has been thermally transferred onto the transparent medium, through the transparent medium, between the color of the ink layer before the superimposition of the retroreflective sheet, onto the transparent medium on its printed face side and the color of the ink layer after the superimposition of the retroreflective sheet is not more than 10 as determined according to a color difference formula in L*a*b* colorimetric system specified in Commission International de l'Eclairage (CIE),
wherein the white opaque layer comprises a resin binder and at least one material selected from the group consisting of titanium oxide, zinc oxide, silica, aluminum hydroxide, talc, clay, and kaolinite, and
wherein the retroreflective sheet has a surface of at least one material selected from the group consisting of organic pigments, inorganic pigments, metal flakes, glass flakes, glass beads, pearl essence pigments, and dyes.

A white opaque layer comprising a resin binder and at least one material selected from the group consisting of titanium oxide, zinc oxide, silica, aluminum hydroxide, talc, clay, and kaolinite is provided between the colored layer and the substrate in the thermal transfer sheet. According to this construction, the color of the colored medium superimposed on the printed part can be more fully concealed, and the hue inherent in the colored layer can easily be reproduced on the colored medium.

Further, preferably, an adhesive layer is provided on the colored layer. According to this construction, the fixation of an ink layer, such as a colored layer, thermally transferred onto the transferred object medium can be improved.

Fig. 1 is a diagram showing an embodiment of the thermal transfer sheet used in the method according to the present invention, for use in thermal transfer onto a transparent object;
Fig. 2 is a diagram showing another embodiment of the thermal transfer sheet used in the method according to the present invention, for use in thermal transfer onto a transparent object; and
Fig. 3 is a diagram showing a further embodiment of the thermal transfer sheet used in the method according to the present invention, for use in thermal transfer onto a transparent object.

Next, embodiments of the present invention will be described in detail.

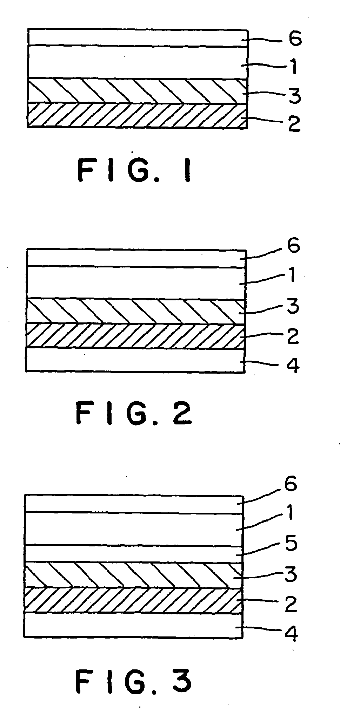

Fig. 1 shows an embodiment of the thermal transfer sheet used in the method according to the present invention, for use in thermal transfer onto a transparent object. In this thermal transfer sheet, a thermally transferable ink layer composed of a white opaque layer 3 and a colored layer 2 is provided on one side of a substrate 1, and a heat-resistant layer 6 is provided on the other side of the substrate 1.

Fig. 2 shows another embodiment of the thermal transfer sheet used in the method according to the present invention, for use in thermal transfer onto a transparent object. In this thermal transfer sheet, a thermally transferable ink layer composed of a white opaque layer 3, a colored layer 2, and an adhesive layer 4 is provided on one side of a substrate 1, and a heat-resistant layer 6 is provided on the other side of the substrate 1. In this case, the provision of the adhesive layer 4 in the thermal transfer sheet can improve the fixation of the thermally transferred ink layer onto the object.

Fig. 3 shows a further embodiment of the thermal transfer sheet used in the method according to the present invention, for use in thermal transfer onto a transparent object. In this thermal transfer sheet, a thermally transferable ink layer composed of a peel layer 5, a white opaque layer 3, a colored layer 2, and an adhesive layer 4 is provided on one side of a substrate 1, and a heat-resistant layer 6 is provided on the other side of the substrate 1. In this embodiment, by virtue of the provision of the peel layer 5 in the thermal transfer sheet, at the time of the thermal transfer, the peel layer is melted to improve the separability of the white opaque layer from the substrate. At that time, at least a part of the peel layer is transferred together with the colored layer and the white opaque layer and stays on the surface of the transferred image and, after the transfer, functions as a protective layer for the colored layer and the white opaque layer, particularly functions to impart good slipperiness to the transferred image and thus to improve scratch resistance of the transferred image.

Individual layers constituting the thermal transfer sheet used in the method according to the present invention will be described in more detail.

Substrate:

The same substrate as used in conventional thermal transfer sheets as such may be used as the substrate 1 used in the thermal transfer sheet according to the present invention. Further, other substrates may also be used without particular limitation. Specific examples of preferred substrates include films of plastics such as polyesters, polypropylenes, cellophanes, polycarbonates, cellulose acetates, polyethylenes, polyvinyl chlorides, polystyrenes, nylons, polyimides, polyvinylidene chlorides, polyvinyl alcohols, fluororesins, chlorinated rubbers, and ionomers, papers such as capacitor papers and paraffin papers, and nonwoven fabrics. Further, composite materials of the above materials may also be used. A polyethylene terephthalate film is particularly preferred as the substrate. The thickness of the substrate may be properly varied depending upon the material so that the strength and the thermal conductivity of the substrate are proper. Preferably, however, the thickness of the substrate is, for example, about 2 to 10 $\mu$m.

Colored layer:

In the thermal transfer sheet according to the present invention, the colored layer 2 is formed by dissolving or dispersing a colorant and a binder and optionally auxiliaries such as a plasticizer, a surfactant, a lubricant, and a fluidity modifier in a solvent to prepare a coating liquid and coating the coating liquid onto a substrate at a coverage on a dry basis of about 0.1 to 5 g/m², preferably 0.3 to 1.5 g/m², by a conventional method such as hot melt coating, hot lacquer coating, gravure direct coating, gravure reverse coating, knife coating, air coating, or roll coating.

When the thickness of the dry coating is less than 0.1 $g/m^2$, an even ink layer cannot be formed due to a problem of film forming properties. On the other hand, when the thickness of the dry coating exceeds 5 $g/m^2$, high energy is required for transfer for printing. In this case, disadvantageously, printing can carried out only by a special thermal transfer printer.

Individual colorants for yellow, magenta, cyan, black, white and the like can be properly selected from conventional dyes and pigments. However, for example, when a white opaque layer, which will be described later, is not provided in the thermal transfer sheet, a pigment-type colorant having a low level of transparency is preferred. Pigments usable herein include conventional inorganic pigments, for example, black pigments such as carbon black and graphite, red pigments such as iron oxide red and antimony red, yellow pigments such as ocher and zinc yellow, blue pigments such as iron blue and ultramarine blue, and white pigments such as titanium oxide and zinc sulfide. Additional pigments usable herein include organic pigments, for example, benzimidazolone monoazo, quinacridone, phthalocyanine, dioxazine, isoindolinone, perylene, thioindigo, and quinophthalone organic pigments. The above inorganic or organic pigments have low transparency and, at the same time, can yield thermally transferred prints which, even when used in outdoor applications, do not cause significant fading and have excellent weathering resistance.

Further, in the present invention, the hue of the colored layer in the thermally transferable ink layer for thermal transfer recording is regulated depending upon color or a pattern of the recording face of the object on which the colored layer is to be thermally transferred. Since the hue is determined by the hue of the colorant contained in the colored layer, a pigment having desired hue is selected from the above-described pigments. The pigment added to the colored layer is not limited one type, and a plurality of pigments can be added as the colorant to the colored layer. Preferably, the binder used in the colored layer is composed mainly of a resin. Specific examples of resins include cellulosic resins, melamine resins, polyester resins, polyamide resins, polyolefin resins, acrylic resins, styrene resins, vinyl chloride-vinyl acetate copolymers, styrene-butadiene rubbers and other thermoplastic elastomers. Among the resins usable as the binder, polyester resins, acrylic resins, and vinyl chloride-vinyl acetate copolymers are preferred particularly from the viewpoints of transferability, scratch resistance, heat resistance and the like. In addition to the above binders, if necessary, a wax component may also be added in such an amount that is not detrimental to the heat resistance and the like.

Waxes include, for example, microcrystalline wax, carnauba wax, and paraffin wax. Additional waxes include various waxes, for example, Fischer-Tropsh wax, various low-molecular weight polyethylenes, Japan wax, beeswax, spermaceti, insect wax, wool wax, shellac wax, candelilla wax, petrolactam, polyester wax, partially modified wax, fatty esters, and fatty amides. Among them, waxes having a melting point of 50 to 85°C are particularly preferred. When the melting point is below 50°C, a problem of storage stability occurs. On the other hand, when the melting point is above 85°C, sensitivity in printing is unsatisfactory.

Preferably, the colored layer is formed of an ink composition composed of a mixture of 20 to 70% by weight of a colorant and 80 to 30% by weight of a binder. When the amount of the colorant is below the lower limit of the above-defined amount range, the coverage should be increased for ensuring the colorant concentration, leading to unsatisfactory sensitivity in printing. On the other hand, when the amount of the colorant is above the upper limit of the above-defined amount range, the film forming property is unsatisfactory and the colored layer after printing is likely to have lowered scratch resistance.

White opaque layer:

In the thermal transfer sheet used in the method according to the present invention, a white opaque layer 3 is provided on the colored layer. When the white opaque layer is provided, the colored recording face of the object can be more fully concealed. Therefore, the provision of the white opaque layer 3 can solve such a problem that, due to the influence of the recording face (ground), the hue of the thermally transferred colored layer is disadvantageously viewed as a color mixture, composed of the color of the recording face with the color of the colored layer, which is different from the hue inherent from the colored layer and, consequently, the recorded information is rendered somewhat, highly or quite illegible.

The white opaque layer is formed by dispersing at least one material having a high level of opacifying property, selected from the group of white pigments consisting of titanium oxide, zinc oxide, silica, aluminum hydroxide, talc, clay, and kaolinite, and a binder such as a thermoplastic resin or wax in an organic solvent, water or the like to prepare a white coating liquid and coating the coating liquid at a coverage on a solid weight basis of about 0.1 to 20 $g/m^2$ by conventional coating means. The white pigment may be added in an amount of about 0.1 to 10 parts by weight based on one part by weight of the binder.

Among the above-described white pigments, titanium dioxide and zinc oxide are preferred from the viewpoints of opacity, whiteness, dispersibility, and stability. Titanium dioxide may be any of a rutile form of titanium dioxide and an anatase form of titanium dioxide. These forms of titanium dioxide may be used either alone or as a mixture thereof. Further, titanium dioxide may be one produced by a sulfuric acid process or by a chlorine process. The titanium dioxide may have been properly subjected to surface coating treatment with an inorganic material, for example, hydrous alumina treatment, hydrous silicon dioxide treatment, or zinc oxide treatment, or surface treatment with a compound such as a polyhydric alcohol such as trimethylolmethane or trimethylolethane, a silane coupling agent such as methyltrimethoxysilane, polysiloxane such as polydimethylsiloxane, a ε-caprolactam compound, or titanate coupling.

Adhesive layer:

The thermal transfer sheet used in the method according to the present invention may comprise a substrate and, provided on the substrate in the following order, a colored layer, a white opaque layer, and an adhesive layer 4. The provision of the adhesive layer 4 can improve the adhesion between the object and a thermally transferred ink layer. The adhesive layer is composed mainly of a thermoplastic elastomer which, upon exposure to heat of a thermal head, a laser beam or the like, is softened to exhibit adhesion. In order to prevent blocking in winding the thermal transfer sheet into a roll form, antiblocking agents such as waxes, amides of higher fatty acids, and esters and salts, fluororesins, and inorganic material powders may be added to the thermoplastic elastomer. Waxes, which may be added to the thermoplastic elastomer, include, for example, microcrystalline wax, carnauba wax, and paraffin wax. Additional waxes include various waxes, for example, Fischer-Tropsh wax, various low-molecular weight polyethylenes, Japan wax, beeswax, spermaceti, insect wax, wool wax, shellac wax, candelilla wax, petrolatum, polyester wax, partially modified wax, fatty esters, and fatty amides.
Thermoplastic elastomers include, for example, ethylene-vinyl acetate copolymer (EVA), ethylene-acrylic ester copolymer (EEA), polyester resin, polyethylene, polystyrene, polypropylene, polybutene, petroleum resin, vinyl chloride resin, vinyl chloride-vinyl acetate copolymer, polyvinyl alcohol, vinylidene chloride resin, methacrylic resin, polyamide, polycarbonate, polyvinyl formal, polyvinyl butyral, cellulose acetate, cellulose nitrate, polyvinyl acetate, polyisobutylene, ethyl cellulose, and polyacetal. Thermoplastic elastomers having a relatively low softening point, for example, a softening point of 50 to 150°C, which have hitherto been used as heat-sensitive adhesives are particularly preferred. The adhesive layer may be formed by hot-melt coating the above-described thermoplastic elastomer and additive or by dissolving or dispersing the thermoplastic elastomer and additive in a suitable organic solvent or water to prepare a coating liquid for an adhesive layer and coating the coating liquid by a conventional method such as hot melt coating, hot lacquer coating, gravure direct coating, gravure reverse coating, knife coating, air coating, or roll coating at a coverage on a dry basis of about 0.05 to 5 g/m$^2$. When the coverage of the dry coating is less than 0.05 g/m$^2$, the adhesion between the object and the thermally transferred ink layer is so low that defective transfer occurs in the printing. On the other hand, when the coverage of the dry coating exceeds 5 g/m$^2$, sensitivity in transfer at the time of printing is lowered and, as a result, satisfactory print quality cannot be provided.

Peel layer:

In the thermal transfer sheet used in the method according to the present invention, a peel layer 5 may be provided between the substrate and the colored layer. At the time of thermal transfer, the peel layer 5 is melted to improve the separability of the colored layer from the substrate. In this case, at least a part of the peel layer is transferred together with the colored layer and stays on the transferred image and, after the transfer, functions as a protective layer for the colored layer, particularly functions to impart good slipperiness to the transferred image to improve the scratch resistance of the transferred image. For example, resins having a high level of separability such as acrylic resins, silicone resins, fluororesins, or silicone- or fluorine-modified various resins may be used for the formation of the peel layer. Preferably, however, the peel layer is composed mainly of wax.
Preferred waxes include various waxes which, at the time of printing, are melted to exhibit separability. Specific examples of preferred waxes include various waxes, for example, microcrystalline wax, carnauba wax, paraffin wax, Fischer-Tropsh wax, various low-molecular weight polyethylenes, Japan wax, beeswax, spermaceti, insect wax, wool wax, shellac wax, candelilla wax, petrolatum, partially modified wax, fatty esters, and fatty amides. Particularly preferred waxes include microcrystalline wax and carnauba wax which have a relatively high melting point and are less likely to be soluble in solvents.
The peel layer is preferably thin, for example, has a thickness of about 0.1 to 2 g/m$^2$ on a dry basis, from the viewpoint of avoiding a lowering in sensitivity of the thermal transfer sheet.
In the thermal transfer sheet used in the method according to the present invention, a thermally transferable ink layer comprising the above-described colored layer and white opaque layer and optionally the peel layer and the adhesive layer are provided on the substrate.
In the present invention, when the recording face of the object used in combination with the thermal transfer sheet is a colored one, the difference in color between an ink layer thermally transferred onto the object and an ink layer as measured from the opposite side of the substrate in the thermal transfer sheet, that is, from the surface of the substrate remote from the colored layer, is not more than 10 as determined according to a color difference formula in L*a*b* colorimetric system specified in Commission International de l'Eclairage (CIE). In the above thermal transfer sheet, since any layer such as a heat-resistant layer is not provided on the other side of the substrate, the substrate is in a transparent sheet form.

The color difference formula in L*a*b* colorimetric system in CIE is as follows.

Assuming that the color difference between two colors is ΔE*ab, the metrics brightness is L, a and b are quantities associated with hue and chroma, and surface colors L*a*b* of two objects are ($L_1^*$, $a_1^*$, $b_1^*$) and ($L_2^*$, $a_2^*$, $b_2^*$),

$$\Delta E \ast ab = [(\Delta L\ast)^2 + (\Delta a\ast)^2 + (\Delta b\ast)^2]^{1/2}$$

$$\Delta L \ast = L_2 \ast - L_1 \ast$$

$$\Delta a \ast = a_2 \ast - a_1 \ast$$

$$\Delta b \ast = b_2 \ast - b_1 \ast$$

When the color difference between the two colors, ΔE*ab, is larger than 10, the ink layer thermally transferred from the thermal transfer sheet is disadvantageously viewed, on the object having a colored recording face, as color different from the color inherent from the ink layer. When the ΔE*ab value is not more than 10, the faithfulness of the reproduction of hue inherent in the ink layer on the object having a colored recording face increases with decreasing the ΔE*ab value (making the ΔE*ab value closer to 0 (zero)).

Heat-resistant layer:

Further, in the present invention, for example, when the substrate is formed of a material having low heat resistance, preferably, a heat-resistant layer 6 is provided on the surface of the substrate on its side, which comes into contact with a thermal head, that is, on its side remote from the colored layer, from the viewpoints of improving the slipperiness of the thermal head and preventing sticking the thermal transfer sheet to the thermal head. The heat-resistant layer basically comprises a heat-resistant resin and a material which can serve as a thermal release agent or a lubricant. The provision of the heat-resistant layer is advantageous in that, even in the case of a thermal transfer sheet using a plastic film having low heat resistance as the substrate, thermal transfer printing can be carried out without causing sticking and advantages inherent in the plastic film, that is, high level of toughness and workability, can be utilized. The heat-resistant layer may be formed by using a suitable material, for example, a binder resin containing additives such as a lubricant, a surfactant, inorganic particles, organic particles, and a pigment. Binder resins usable in the heat-resistant layer include, for example, cellulosic resins such as ethyl cellulose, hydroxyethyl cellulose, hydroxypropylcellulose, methyl cellulose, acetylcellulose, cellulose acetate butyrate, and nitrocellulose, vinyl resins such as polyvinyl alcohol, polyvinyl acetate, polyvinyl butyral, polyvinyl acetal, polyvinyl pyrrolidone, acrylic resin, polyacrylamide, and acrylonitrile-styrene copolymers, polyester resins, polyurethane resins, and silicone-modified or fluorine-modified urethane resins.

Among them, a crosslinking resin using a material having a few reactive groups, for example, hydroxyl groups, and a polyisocyanate or the like as a crosslinking agent is preferred. The heat-resistant layer may be formed by adding additives such as a lubricant, a surfactant, inorganic particles, organic particles, and pigments, to the above binder resin to prepare a mixture, dissolving or dispersing the mixture in a suitable solvent to prepare a coating liquid, coating the coating liquid by conventional means such as a gravure coater, a roll coater, or a wire bar, and drying the coating.

## EXAMPLES

Next, the present invention will be described in more detail with reference to the following examples. In the following examples, "parts" or "%" is by weight unless otherwise specified.

Example 1(Reference Example)

A 4.5 μm-thick polyethylene terephthalate film (Lumirror®, manufactured by Toray Industries, Inc.) was provided as a substrate. A coating liquid for a colored layer having the following composition was gravure coated on one side of the substrate at a coverage of 2.0 g/m² on a dry basis, and the coating was then dried to form a colored layer. Further, a coating liquid for a white opaque layer having the following composition was gravure coated at a coverage of 2.0 g/m² on a dry basis on the colored layer, and the coating was then dried to form a white opaque layer. Thus, a thermal transfer sheet of Example 1 was prepared. In this case, a coating liquid for a heat-resistant layer having the following composition was previously gravure coated at a coverage of 0.1 g/m² on a dry basis on the opposite side of the substrate, and the coating was then dried to form a heat-resistant layer.

Coating liquid for colored layer:

| | |
|---|---|
| Blue pigment: cyanine blue KRG (manufactured by SANYO COLOR WORKS, Ltd.) | 9 pts. |
| Acrylic resin (BR 113, manufactured by Mitsubishi Rayon Co., Ltd.) | 21 pts. |
| Polyethylene wax | 2 pts. |
| Toluene | 34 pts. |
| Methyl ethyl ketone | 34 pts. |

Coating liquid for white opaque layer:

| | |
|---|---|
| Titanium oxide (CR-80, average particle diameter; 0.25 μm, manufactured by Ishihara Sangyo Kaisha Ltd.) | 40 pts. |
| Vinyl chloride-vinyl acetate copolymer (DENKA® LAC TF 300 K, manufactured by Denki kagaku Kogyo K.K.) | 5 pts. |
| Polyester resin (VYLON® 200, manufactured by Toyobo Co., Ltd.) | 5 pts. |
| Toluene | 20 pts. |
| Methyl ethyl ketone | 20 pts. |
| Ethyl acetate | 10 pts. |

Coating liquid for heat-resistant layer:

| | |
|---|---|
| Styrene-acrylonitrile copolymer | 11 pts. |
| Linear saturated polyester resin | 0.5 pt. |
| Zinc stearyl phosphate | 5 pts. |
| Urea resin powder | 5 pts. |
| Melamine resin powder | 3 pts. |
| Toluene | 40 pts. |
| Methyl ethyl ketone | 40 pts. |

Example 2(Reference Example)

A thermal transfer sheet of Example 2 was prepared in the same manner as in Example 1, except that the coating liquid for a colored layer was changed to the following coating liquid and a coating liquid for an adhesive layer having the following composition was gravure coated at a coverage of 0.6 g/m² on a dry basis on the white opaque layer followed by drying to form an adhesive layer.

Coating liquid for colored layer:

| Red pigment (Hostaperm® E5B-02, manufactured by Clariant Japan) | 9 pts. |
| Acrylic resin (BR 113, manufactured by Mitsubishi Rayon Co., Ltd.) | 21 pts. |
| Polyethylene wax | 2 pts. |
| Toluene | 34 pts. |
| Methyl ethyl ketone | 34 pts. |

Coating liquid for adhesive layer:

| Acetal resin (S-LEC KS-1, manufactured by Sekisui Chemical Co., Ltd.) | 5 pts. |
| Carnauba wax | 45 pts. |
| Isopropyl alcohol | 25 pts. |
| Water | 25 pts. |

Example 3

The same substrate as used in Example 1 was provided. A coating liquid for a white opaque layer having the same composition as used in Example 1 was gravure coated at a coverage of 2.0 g/m$^2$ on a dry basis onto one side of the substrate, and the coating was then dried to form a white opaque layer. A coating liquid for a colored layer having the same composition as used in Example 1 was gravure coated at a coverage of 2.0 g/m$^2$ on a dry basis onto the white opaque layer, and the coating was then dried to form a colored layer. Thus, a thermal transfer sheet of Example 3 was prepared.

Comparative Example 1

A thermal transfer sheet of Comparative Example 1 was prepared in the same manner as in Example 1, except that the white opaque layer was not formed.

Printing was carried out using the thermal transfer sheets of the examples and the comparative example under the following printing conditions. For the prints thus obtained, color difference ΔE*ab and the value of $[(\Delta a^*)^2 + (\Delta b^*)^2]^{1/2}$ in L*a*b* colorimetric system specified in CIE were measured by the following method, and, further, visual legibility was evaluated.

Printing conditions:

CQL-4 manufactured by Astro-Med, Inc. was used as a printer. Two labels, a yellow label and a silver label, were used as the object for Examples 1 and 2 and Comparative Example 1, and a transparent sheet was used for Example 3. A character pattern was printed on these objects.

Conditions for measurement of color difference etc.:

For 2 parts, a recorded part (a part with the thermally transferred ink layer) and a nonrecorded part (a recording face of the object) in the print, color difference ΔE*ab and the value of $[(\Delta a^*)^2 + (\Delta b^*)^2]^{1/2}$ in L*a*b* colorimetric system specified in CIE were measured with a colorimeter/color difference meter CR-221 manufactured by Minolta Camera Co., Ltd. using $D_{65}$ as a light source.

For the prints using the thermal transfer sheets of Examples 1 and 2 and Comparative Example 1, the difference in color between a recorded part (a part with the thermally transferred ink layer) in the print and an ink layer as measured from the surface of the substrate in the thermal transfer sheet remote from the colored layer was measured with the colorimeter/color difference meter CR-221 manufactured by Minolta Camera Co., Ltd. as used above. For the print using the thermal transfer sheet of Example 3, the difference in color between a recorded part in the print with the silver label superimposed on the printed face side of the transparent sheet, and an ink layer as measured from the surface of the substrate in the thermal transfer sheet remote from the colored layer was measured. In this case, the measurement was made for the thermal transfer sheet in which any layer such as a heat-resistant layer had not been provided on the backside thereof.

The usual light source $D_{65}$ is a light source used in illumination specified in JIS (Japanese Industrial Standards) Z 8723 (1988) and is a usual light source of which the relative spectral distribution approximate that of standard light $D_{65}$ for colorimetry. The standard light $D_{65}$ as the approximation object is light having a correlated color temperature of about 6504K and is used for indication of an object color illuminated by daylight.

Measurement results are shown in Tables 1 and 2 below.

Table 1

| Object/ink layer | | Recording face of object | | | Printed part | | | $\Delta E^*ab$ | $[(\Delta a^*)^2 + (\Delta b^*)^2]^{1/2}$ |
|---|---|---|---|---|---|---|---|---|---|
| | | $L_1$ | $a_1$ | $b_1$ | $L_2$ | $a_2$ | $b_2$ | | |
| Ex. 1 | Yellow label/ blue | 64.32 | 9.02 | 92.97 | 17.46 | 37.80 | -58.55 | 161.19 | 154.23 |
| | Silver label/ blue | 73.69 | -1.21 | -2.19 | 20.82 | 46.00 | -69.94 | 98.05 | 82.58 |
| Ex. 2 | Yellow label/red | 64.18 | 9.12 | 93.53 | 31.02 | 37.18 | 20.21 | 85.22 | 78.51 |
| | Silver label/red | 73.84 | -1.25 | -2.04 | 31.58 | 36.66 | 15.82 | 59.52 | 41.91 |
| Object (ink layer) /colored sheet | | Recording face of object | | | Printed part | | | $\Delta E^*ab$ | $[(\Delta a^*)^2 + (\Delta b^*)^2]^{1/2}$ |
| | | $L_1$ | $a_1$ | $b_1$ | $L_2$ | $a_2$ | $b_2$ | | |
| Ex. 3 | Blue/yellow label | 64.32 | 9.02 | 92.97 | 17.46 | 37.80 | -58.55 | 161.19 | 154.23 |
| | Blue/silver label | 73.69 | -1.21 | -2.19 | 20.82 | 46.00 | -69.94 | 98.05 | 82.58 |

Table 2

| Object/ink layer | | Backside of thermal transfer sheet | | | Printed part | | | $\Delta E^*ab$ |
|---|---|---|---|---|---|---|---|---|
| | | $L_1$ | $a_1$ | $b_1$ | $L_2$ | $a_2$ | $b_2$ | |
| Ex. 1 | Yellow label/blue | 21.40 | 45.16 | -69.67 | 19.70 | 39.36 | -62.37 | 9.48 |
| | Silver label/blue | 21.40 | 45.16 | -69.67 | 20.76 | 43.09 | -67.43 | 3.13 |
| Ex. 2 | Yellow label/red | 32.45 | 39.61 | 15.50 | 30.92 | 37.37 | 18.86 | 4.35 |
| | Silver label/red | 32.45 | 39.61 | 15.50 | 31.22 | 37.03 | 14.76 | 2.98 |
| Object (ink layer) /colored sheet | | Recording face of object | | | Printed part | | | $\Delta E^*ab$ |
| | | $L_1$ | $a_1$ | $b_1$ | $L_2$ | $a_2$ | $b_2$ | |
| Ex. 3 | Blue/yellow label | 21.40 | 45.16 | -69.67 | 19.70 | 39.36 | -62.37 | 9.48 |
| | Blue/silver label | 21.40 | 45.16 | -69.67 | 20.76 | 43.09 | -67.43 | 3.13 |

Visual legibility:

Prints provided under the above printing conditions were visually observed for reading the recorded information at a position 5 m distant from the prints, and the visual legibility was evaluated according to the following criteria:

A: The recorded information was very sharp, and the information was highly legible.
B: The recorded information was sharp, and the information was legible.
C: The recorded information was somewhat unsharp, or the recorded part was viewed as color different from the color inherent in the colored layer, making the information somewhat illegible.
D: The recorded information was very unsharp, or the recorded part was viewed as color utterly different from the color inherent in the colored layer, making the information highly illegible.

The results of the evaluation of visual legibility for the examples and the comparative example are shown in Table 3 below.

Table 3

|  | Yellow label | Silver label |
|---|---|---|
| Example 1 | A | B |
| Example 2 | B | B |
| Example 3 | A | B |
| Comparative Example 1 | D | C |

**Claims**

**1.** A method of thermal transfer printing on a transparent medium using a thermal transfer sheet comprising a substrate (1), at least a colored layer (2) provided on one side of the substrate (1) and a white opaque layer (3) provided between the colored layer (2) and the substrate (1), wherein, when thermal transfer is carried out from said thermal transfer sheet onto the transparent medium to provide a thermal transfer printed face, on the transparent medium, on which a retroreflective sheet having a colored surface is then superimposed, the difference in color, as measured, for the color of an ink layer, which comprises at least the colored layer (2) and the white opaque layer (3), which has been thermally transferred onto the transparent medium, through the transparent medium, between the color of the ink layer before the superimposition of the retroreflective sheet, onto the transparent medium on its printed face side and the color of the ink layer after the superimposition of the retroreflective sheet is not more than 10 as determined according to a color difference formula in L*a*b* colorimetric system specified in Commission International de l'Eclairage (CIE),
wherein the white opaque layer (3) comprises a resin binder and at least one material selected from the group consisting of titanium oxide, zinc oxide, silica, aluminum hydroxide, talc, clay, and kaolinite, and
wherein the retroreflective sheet has a surface of at least one material selected from the group consisting of organic pigments, inorganic pigments, metal flakes, glass flakes, glass beads, pearl essence pigments, and dyes.

**2.** The method according to claim 1, wherein the adhesive layer (4) is provided on the colored layer (2).

**3.** A print obtainable by the method according to claim 1 comprising a thermally transferred image which has been formed on a transparent object medium.

**4.** A licence plate comprising the print according to claim 3 and a retroreflective sheet superimposed on the print on its printed face side.

**Patentansprüche**

**1.** Verfahren zum Thermotransferdruck auf einem transparenten Medium unter Verwendung eines Thermotransferblattes, welches ein Substrat (1), mindestens eine auf einer Seite des Substrates (1) angeordnete farbige Schicht (2) und eine zwischen der farbigen Schicht (2) und dem Substrat (1) angeordnete weiße Deckschicht (3) umfasst, wobei, wenn Thermotransfer von dem Thermotransferblatt auf das transparente Medium durchgeführt wird, um eine thermotransferbedruckte Seite bereitzustellen, auf dem transparenten Medium, über welchem dann eine rückreflektierende Platte bzw. ein rückreflektierendes Blatt mit einer farbigen Oberfläche angeordnet wird, der Farbunterschied, wie gemessen für die Farbe einer Tintenschicht, welche mindestens die farbige Schicht (2) und die weiße Deckschicht (3) umfasst, welche thermisch auf das transparente Medium übertragen worden ist, durch das transparente Medium, zwischen der Farbe der Tintenschicht vor der Übereinanderlagerung der rückreflektierenden Platte, auf das transparente Medium auf dessen bedruckter Seite, und der Farbe der Tintenschicht nach der Übereinanderlagerung der rückreflektierenden Platte nicht mehr als 10 beträgt, bestimmt gemäß einer Farbunterschiedsformel im L*a*b*-Farbsystem, spezifiziert in Commission International de l'Eclairage (CIE),
wobei die weiße Deckschicht (3) ein Harzbindemittel und mindestens ein Material, ausgewählt aus der Gruppe, bestehend aus Titanoxid, Zinkoxid, Siliziumdioxid, Aluminiumhydroxid, Talk, Ton und Kaolinit, umfasst, und
wobei die rückreflektierende Platte eine Oberfläche aus mindestens einem Material, ausgewählt aus der Gruppe, bestehend aus organischen Pigmenten, anorganischen Pigmenten, Metallflocken, Glasflocken, Glasperlen, Perlmuttessenz-Pigmenten und Farbstoffen, aufweist.

**2.** Verfahren nach Anspruch 1, wobei eine Haftmittelschicht (4) auf der farbigen Schicht (2) angeordnet ist.

**3.** Druck, erhältlich durch das Verfahren nach Anspruch 1, welcher ein thermisch übertragenes Bild umfasst, welches auf einem transparenten Objektmedium gebildet worden ist.

**4.** Kennzeichenschild, umfassend den Druck nach Anspruch 3 und eine rückreflektierende Platte, welche über dem Druck auf dessen bedruckter Seite angeordnet ist.

**Revendications**

**1.** Procédé d'impression par transfert thermique sur un milieu transparent utilisant une feuille de transfert thermique comprenant un substrat (1), au moins une couche colorée (2) fournie sur un côté du substrat (1), et une couche opaque blanche (3) fournie entre la couche colorée (2) et le substrat (1), dans lequel, quand le transfert thermique est réalisé de ladite feuille de transfert thermique sur le milieu transparent pour fournir une face imprimée par transfert thermique, sur le milieu transparent, sur lequel une feuille rétroréfléchissante ayant une surface colorée est ensuite superposée, la différence de couleur, telle que mesurée, pour la couleur d'une couche d'encre, qui comprend au moins la couche colorée (2) et la couche opaque blanche (3), qui a été transférée thermiquement sur le milieu transparent, à travers le milieu transparent, entre la couleur de la couche d'encre avant la superposition de la feuille rétroréfléchissante, sur le milieu transparent du côté de sa face imprimée et la couleur de la couche d'encre après la superposition de la feuille rétroréfléchissante n'est pas supérieure à 10 comme déterminé conformément à une formule de différence de couleur du système colorimétrique, à savoir $L*a*b$, spécifiée par la Commission Internationale de l'Éclairage (CIE),
dans lequel la couche opaque blanche (3) comprend une résine liante et au moins un matériau choisi dans le groupe constitué par l'oxyde de titane, l'oxyde de zinc, la silice, l'hydroxyde d'aluminium, le talc, l'argile et la kaolinite, et dans lequel la feuille rétroréfléchissante a une surface d'au moins un matériau choisi dans le groupe constitué par les pigments organiques, les pigments inorganiques, les paillettes métalliques, les paillettes de verre, les billes de verre, les pigments d'essence de perles et les colorants.

**2.** Procédé selon la revendication 1, dans lequel la couche adhésive (4) est fournie sur la couche colorée (2).

**3.** Impression pouvant être obtenue par le procédé selon la revendication 1, comprenant une image transférée thermiquement qui a été formée sur un milieu objet transparent.

**4.** Plaque d'immatriculation comprenant l'impression selon la revendication 3 et une feuille rétroréfléchissante superposée sur l'impression du côté de sa face imprimée.

F I G. 1

F I G. 2

F I G. 3

**EP 1 736 322 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9603285 A
- JP 7195836 A
- JP 7195856 A
- JP 10181230 A
- JP 11221972 A